# EUROPÄISCHE PATENTSCHRIFT

(11) **EP 0 912 831 B1**
(45) Veröffentlichungstag und Bekanntmachung des Hinweises auf die Patenterteilung: **28.04.2004**
(21) Anmeldenummer: 98912288.2
(22) Anmeldetag: 24.02.1998
(51) Int. Cl.: F04C 23/00, F04C 29/02

(54) **VERDICHTERANLAGE**
COMPRESSOR SYSTEM
ENSEMBLE COMPRESSEUR

(30) Priorität: 24.02.1997 DE 19707222
(43) Veröffentlichungstag der Anmeldung: 06.05.1999
(73) Patentinhaber: Steenwinkel, Anthonie P., 61476 Kronberg (DE)
(72) Erfinder: Steenwinkel, Anthonie P., 61476 Kronberg (DE)
(86) Internationale Anmeldenummer: PCT/DE1998/000542
(87) Internationale Veröffentlichungsnummer: WO 1998/037326

(56) Entgegenhaltungen:
- DE-C- 4 135 442
- GB-A- 2 013 785
- US-A- 2 460 957
- US-A- 4 302 160
- US-A- 5 199 858

## Beschreibung

Die Erfindung betrifft eine Kompressor- oder Verdichteranlage nach dem Oberbegriff des Anspruchs 1, die beispielsweise in Werkstätten eingesetzt werden, um Druckluft für Druckluftwerkzeuge, Lackiereinrichtungen und zur Reinigung von Werkzeug oder Maschinenteilen zu erzeugen.

Übliche Verdichteranlagen dieser Art haben den Nachteil, daß sie nicht sehr wartungsfreundlich konstruiert sind. Die Einstellung derartiger Anlagen für den Betrieb sowie der Austausch von Teilen derselben durch einen Wartungsmann sind zu zeitaufwendig. Auch ist ein Nachteil bekannter Kompressoranlagen, daß sie aufwendig konstruiert sind und damit in der Herstellung zu teuer sind.

Ein Nachteil einiger Verdichteranlagen ist, daß ihr Abscheidebehälter ein selbstständiges Anlagenbauteil ist, wodurch die gesamte Anlage groß und überdimensioniert wird. Weiterhin treten Trennstellen auf, wodurch zusätzliche Verbindungsteile erforderlich sind. Diese erhöhen den Materialaufwand und machen zusätzliche Abdichtungsmaßnahmen erforderlich. Solche Verdichteranlagen sind beispielsweise aus der US-A-4 302 160 bekannt.

Bekannt sich auch Verdichteranlagen, die in Kompaktbauweise, d.h. mit integriertem Abscheidebehälter gestaltet sind. Derartige Verdichteranlagen werden auch "Kompaktverdichter"-Anlagen genannt. Bei den Kompaktverdichteranlagen nach dem Stand der Technik ist jedoch nachteilig, daß deren Abscheidebehälter ungünstig gebaut ist. Es treten in der Gehäusewand derselben häufig Spannungsspitzen bis zu 300 N/mm² auf. Die Folge davon ist, daß vor allem bei Festigkeitstests in der Wand des Abscheidebehälters Spannungsbrüche entstehen. Außerdem treten im Gehäuse üblicher Abscheidebehälter verhältnismäßig große Verformungen auf, die sich auf Teile der gesamten Verdichteranlage auswirken, und zwar insbesondere auf drehende Teile, wie zum Beispiel die Rotorlager. Frühzeitiger Verschleiß und erhöhter Wartungsaufwand sind die Folge.

Ausgehend von dem genannten Stand der Technik liegt der Erfindung die Aufgabe zugrunde, eine Verdichteranlage zu schaffen, die einfach herstellbar ist und einen geringen Montage-Aufwand erfordert, so daß die Herstellungskosten für die Verdichteranlage möglichst gering sind. Weiterhin soll eine Verdichteranlage geschaffen werden, die nur einen geringen Wartungsaufwand erfordert.

Auch ist es eine Aufgabe der Erfindung, eine Verdichteranlage mit einer vergleichsweise hohen Betriebssicherheit bereitzustellen, die mit möglichst geringem konstruktiven und Material-Aufwand gewährleistet wird. Als weitere Aufgabe soll der Erfindungsgegenstand im Betrieb eine geringe Geräuschentwicklung aufweisen.

Die Aufgabe wird durch die Merkmale des kennzeichnenden Teils des Anspruchs 1 gelöst. Weitere Ausführungsformen sind in den Unteranspüchen angegeben.

Ein Vorteil der Erfindung besteht darin, daß Wartungsleute mit weniger Handgriffen an jedes Bauteil der Verdichteranlage, insbesondere an den Luftfilter, den Ansaugregler und das Steuerteil direkt herankommen und an diesen leicht zugänglichen Teilen in kürzester Zeit Wartungsarbeiten verrichtet werden können.

Die Konstruktion der Karosserie und des Kompaktverdichters sind vereinfacht und somit in der Herstellung kostengünstiger.

Im folgenden wird eine bevorzugte Ausführungsform der Erfindung anhand der Figuren beschrieben. Es zeigen:
- Fig. 1: eine perspektivische Darstellung der erfindungsgemäßen Verdichteranlage,
- Fig. 2: eine Ausführungsform der erfindungsgemäßen Verdichteranlage in einer Seitenansicht,
- Fig. 3: einen Vertikalschnitt der Verdichteranlage der Fig. 2,
- Fig.4: eine teilweise Darstellung derVerdichteranlage in der Seitenansicht.

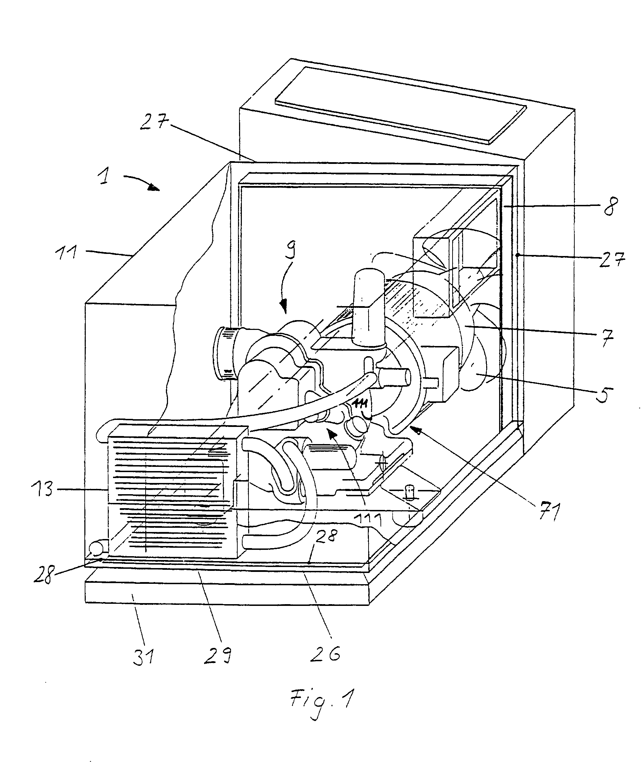

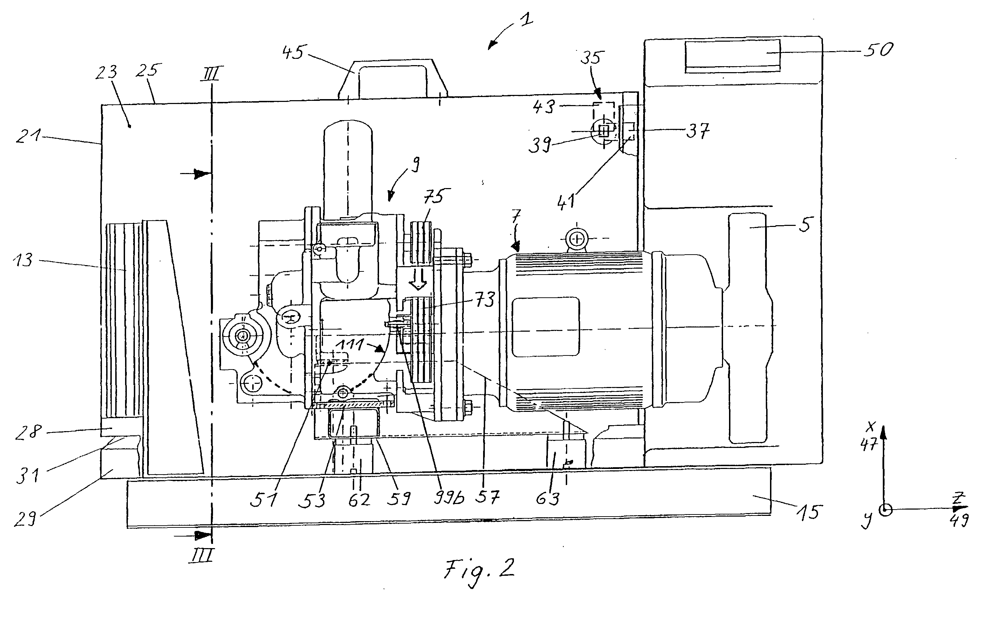

Die Fig. 1 und 2 zeigen die erfindungsgemäße Verdichteranlage 1 mit einem Ventilator 5 an einem ersten Ende der Verdichteranlage 1, einer Motoreinheit 7 mit einem E-Motor, einem an dem ersten Ende der Verdichteranlage 1 liegenden Rahmen 8, einem Kompaktverdichter 9, einer Hebe- und Schiebehaube 11, einem Kühler 13 an einem zweiten Ende der ersten Ende der Verdichteranlage 1, sowie zwei paralell verlaufenden Trägern 15 (in Fig. 1 nicht dargestellt).

Die Hebe- und Schiebehaube 11 weist eine Frontfläche 21, in Längsrichtung der Verdichteranlage 1 zwei Seitenflächen 23, sowie eine Oberseite 25 auf. Entlang der unteren der Frontfläche 21 und der Seitenflächen 23, sowie entlang der seitlichen Umrandungen 27 der Seitenflächen 23 und der Oberseite 25 sind Versteifungsleisten 28 angeordnet. Die Versteifungsleisten 28 befinden sich bevorzugt an der Innenseite der Hebe- und Schiebehaube 11. Wenn sich die Hebe- und Schiebehaube 11 in der in Fig. 2 dargestellten geschlossenen Stellung befindet, liegt sie mit ihrer unteren Umrandung 26 auf Dichtleisten 31 auf, die an der oberen Seite eines auf den Trägern 15 angebrachten Bodenblechs 29 angeordnet ist. Die freien Umrandungen der Seitenflächen 23 und die Oberseite 25 der Hebe- und Schiebehaube 11, die ebenfalls entlang ihrer Ränder mit einer Versteifungsleiste 28 versehen sind, liegen in der geschlossenen Stellung der Haube 11 an dem U-förmigen Rahmen 8 auf, der in vertikaler Richtung verläuft und aus drei Rahmenleisten 30 gebildet wird.

Die Dichtleisten 31 bewirken, daß der Kompaktverdichter 9 gegen Staub und Schmutz gegenüber der Umgebung abgeschlossen ist. Außerdem bewirkt das Aufliegen der Hebe- und Schiebehaube 11 auf der Dichtleiste 31 eine akkustische Abdichtung der Verdichteranlage 1 nach außen.

Die Hebe- und Schiebehaube 11 weist in einer Seitenfläche 23 und nahe dem Rand dieser Seitenfläche 23, der auf der Seite des ersten Endes der Verdichteranlage 1 gelegenen ist, einen in Drehverschluß 35 mit einem Halteelement 37 auf. Das Halteelement 37 ist mittels eines durch eine Bohrung in der Hebe- und Schiebehaube 11 hindurchragenden Stiftes (in der Fig. 2 nicht sichtbar) drehbar an der Hebe- und Schiebehaube 11 angebracht. Der Stift weist einen an der Außenseite der Hebe- und Schiebehaube 11 gelegenen Stiftkopf 39 auf. Wenn sich die Hebe- und Schiebehaube 11 in ihrer geschlossenen Stellung befindet, kann das Halteelement 37 durch Drehung des Stiftkopfes 39 in eine schließende Stellung 41 gebracht werden, in der das Halteelement 37 mit der Rahmenleiste 30 zusammenwirkt, um die Hebe- und Schiebehaube 11 gegen Kippbewegungen zu sichern.

Es können auch mehrere Drehverschlüsse 35 an der Hebe- und Schiebehaube 11 vorgesehen sein. Auch können statt Drehverschlüssen auch andere Verschlüsse nach dem Stand der Technik verwendet werden.

Wenn sich der Drehverschluß in der offenen Stellung 43 befindet, kann die Hebe- und Schiebehaube 11 an einem Griff 45 von der übrigen Verdichteranlage 1 weggenommen werden. Dies kann nach oben in Richtung 47, oder auch in axialer Richtung 49 geschehen. In der offenen Stellung 43 des Drehverschlusses 35 kann die Hebe- und Schiebehaube 11 auch in eine halboffene Stellung geschoben werden. Dies hat den Vorteil, daß die Verdichteranlage 1 an Orten aufgestellt werden kann, an denen nach oben verhältnismäßig wenig Platz ist.

Die Verdichteranlage 1 weist an ihrem ersten Ende ein Bedien- und Anzeigenfeld 50 auf. Das Bedien- und Anzeigenfeld 50 enthält die bei Verdichteranlagen üblichen Anzeigen, wie Betriebszustandsanzeigen oder Schalttastaturen. Am Bedien- und Anzeigenfeld 50 sind im wesentlichen auch die elektrischen Anschlüsse und Leitungen, sowie die erfindungsgemäße Verdichteranlage 1 erforderliche Elektronik vorgesehen.

Der Kompaktverdichter 9 ist in einer Kompaktbauweise gebaut, d.h. er ist derart konstruiert, daß er wenig Raum benötigt, und seine wesentlichen Bauteile sind von außen direkt zugänglich. Wenn also die Hebe- und Schiebehaube 11 abgenommen wird, ist es beispielsweise Wartungspersonal ohne weiteres möglich, an jedes wesentliches Bauteil des Kompaktverdichters 9 direkt heranzukommen und an denselben Wartungsarbeiten zu verrichten.

Der Kompaktverdichter 9 ist mittels entsprechender zu dessen Gehäuse gehörender Flansche 51a, 52 an drei Lagerstellen 51, 53, 55 auf Hohlprofilen 57, 59 gelagert (siehe Fig. 1, 2 und 3). Die Lagerstelle 51 befindet sich an der Oberseite eines rechteckförmigen, in axialer oder Z-Richtung verlaufenden Hohlprofils 57, während die Lagerstellen 53, 55 an den beiden Enden einer Platte 56 gelegen sind, die auf die Oberseite eines in Y-Richtung verlaufenden, ebenfalls rechteckförmigen Hohlprofils 59 aufgeschweißt ist. Die Platte 56 ragt axial seitlich über das Hohlprofil 59 hinaus, so daß die Lagerstellen 53. 55 oberhalb und seitlich des Hohlprofils 59 liegen. Aus der Darstellung der Figuren 1, 2 und 3 ist ersichtlich, daß die Lagerstelle 51 räumlich oberhalb der beiden anderen, auf einer horizontalen Ebene angeordneten Lagerstellen 53, 55 gelegen ist, um bei möglichst geringem Materialaufwand für die Befestigung, insbesondere für die Flansche 51a, 52, eine Verringerung sowie günstige Aufnahme der im Betrieb entstehenden, auf die Hohlprofile 57, 59, Pufferelemente 61, 62, 63, 64 und Träger 15 wirkenden Drehmomente und eine hohe Steifigkeit bzw. geringe Vibrationenen zu gewährleisten.

Wie aus den Figuren 1 und 2 ersichtlich ist, ist für die Lagerstelle 51 ein Flansch 51a am Gehäuse des Kompaktverdichters 9 vorgesehen. Für die beiden anderen Lagerstellen 53, 55 weist das Gehäuse des Kompaktverdichters 9 ebenfalls einen Flansch 52 auf, der zur Ausbildung der beiden Lagerstellen 53, 55 entsprechend gestaltet ist. Um die Lagerstellen 53, 55 gehäuseseitig vorzusehen, kann das Gehäuse jedoch auch für jede Lagerstelle 53, 55 jeweils einen eigenen Flansch aufweisen.

Bie der dargestellten Ausführungsform hat der Flansch 52 in Z-Richtung im wesentlichen dieselbe Abmessung wie die auf dem Hohlprofil 59 aufgeschweißte Platte 56. In Z-Richtung gesehen ist die Platte 56 länger als das Hohlprofil 59 breit ist, so daß die Platte 56 seitlich des Hohlprofils 59 in einem bestimmten Maße frei übersteht. Um den Flansch 52 auf der Platte 56 zu befestigen, sind im Bereich dieser überstehenden Teile der Platte 56 Bohrungen 53a, 55a angeordnet, um den Flansch 52 mittels zweier Schraubverbindungen an der Platte 56 zu befestigen.

Der Flansch 51a ist ebenfalls mittels einer Schraubverbindung auf dem Hohlprofil 57 befestigt (Figuren 1, 2 und 3), jedoch ist bei dieser Lagerstelle 51 keine Platte zwischen dem Flansch 51a und der Oberseite des Hohlprofils 57 gelegen.

Durch die beschriebene Drei-Punkt-Lagerung des Kompaktverdichters 9 auf den rechtekförmigen Hohlprofilen 57 und 59 wird im Vergleich zu der üblicherweise vorgesehenen Lagerung auf U-Profilen oder Winkelprofilen eine größere Steifigkeit, insbesondere eine höhere Verwindungs- und Torsionssteifigkeit der Lagerstellen erreicht.

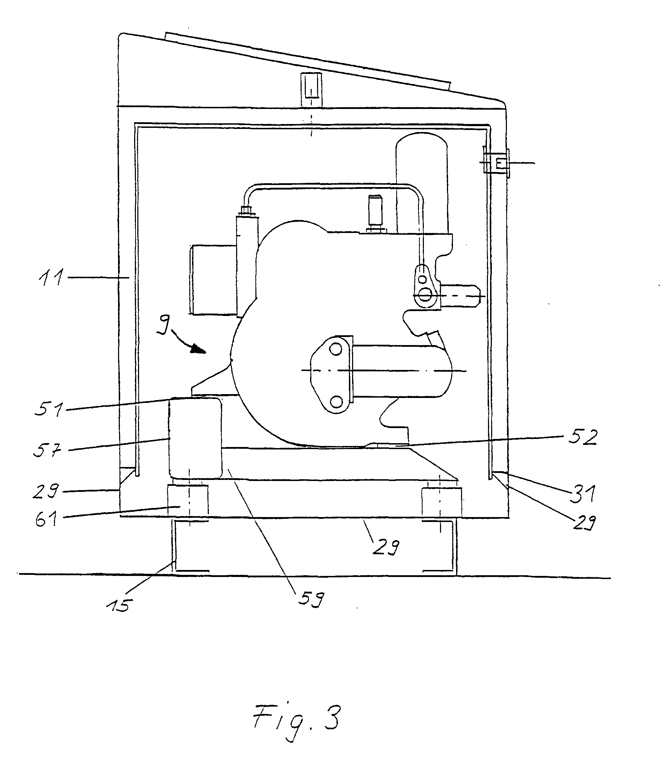

Die Hohlprofile 57, 59 sind auf insgesamt vier Pufferelementen 61, 62, 63, 64 gelagert, die wiederum auf den Trägern 15 befestigt sind (vgl. Fig. 2 und 3). Die Pufferelemente 61, 62, 63, 64 gewährleisten, daß der Kompaktverdichter 9 mit der erforderlichen Elastizität und Dämpfung auf den Trägern 15 gelagert ist.

Die Motoreinheit 7 treibt an ihrer nahe dem ersten Ende der Verdichteranlage 1 gelegenen Seite den Ventilator 5 und an ihrer anderen Seite eine Antriebseinheit oder ein Getriebe 71 an. Die Antriebseinheit 71 ist als Riemenantrieb gestaltet und umfaßt eine Keilriemenscheibe 73, einen Riemen 74, sowie eine Keilriemenscheibe 75. Die Keilriemenscheibe 75 ist auf die Motorwelle der Motoreinheit 7 montiert und treibt den Hauptläufer 77 (in den Figuren nicht dargestellt) des Kompaktverdichters 9 an, der zusammen mit einem Nebenläufer 78 die von der Ventilator 5 zugeführte Luft verdichtet.

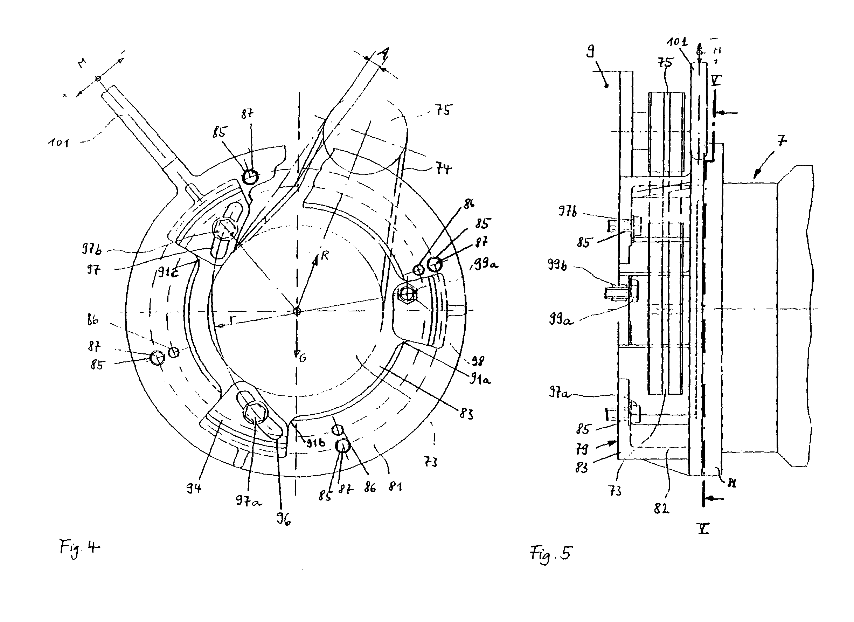

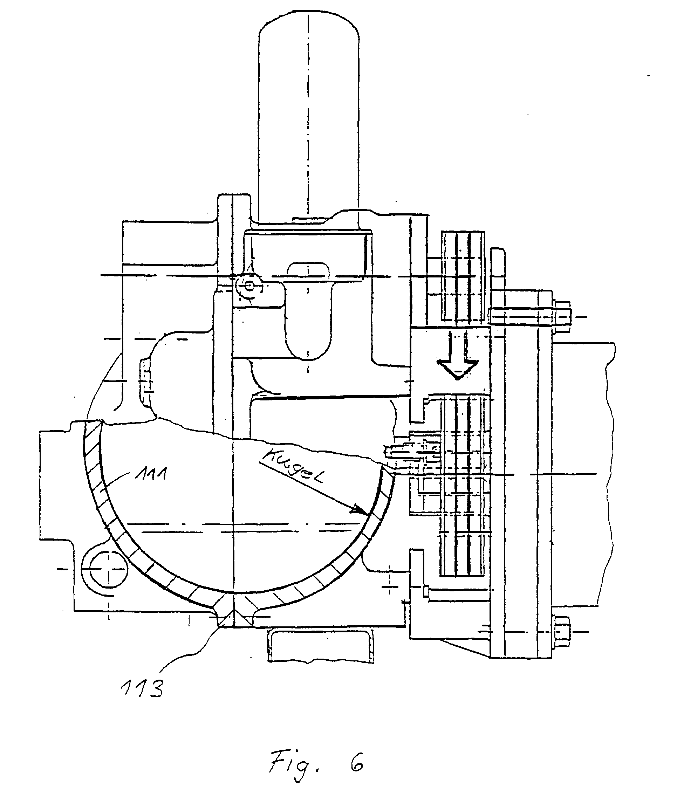

Der erfindungsgemäße Kompaktverdichter 9 weist einen in Fig. 4 dargestellten, zumindest in seiner unteren Hälfte kugelförmigen Abscheidebehälter 111 auf. Der Abscheidebehälter 111 dient zur Trennung des im Kompaktverdichter 9 im Betrieb der Anlage entstehenden Öl-/Luft-Gemisches und zur Aufrechterhaltung eines Luftvorrats mit einem Mindest-Überdruck. Das abgeschiedene Öl wird zur Abdichtung des Verdichterraums und zur Kühlung im Kühler 13 verwendet.

Der Abscheidebehälter 111 ist als Gußteil ausgebildet und weist eine konstante Wandstärke auf. Der Abscheidebehälter 111 ist dabei zweiteilig ausgeführt und weist miteinander verschraubte Dichtflansche 113 auf, die beide Kugelhälften miteinander verbinden.

Der Abscheidebehälter 111 ist zusammen mit dem Gehäuse des Schraubenkompressor-Moduls als insgesamt zweiteiliges Gußgehäuse des Kompaktverdichters 9 gestaltet. Alle wesentlichen Bauteile der Verdichteranlage 1, ausgenommen der Kühler 13, der Ventilator 5 und die Motoreinheit 7 mit der Antriebseinheit 71, sind also in einem im wesentlichen zweiteiligen Gußgehäuse angeordnet.

Dadurch kann die erfindungsgemäße Verdichteranlage und insbesondere der Kompaktverdichter 9 verhältnismäßig günstig hergestellt werden. Vor allem können Bauteile, wie Verbindungselemente eingespart werden, so daß auch der Aufwand für die Montage und Einstellung der Anlage und auch die Fehleranfälligkeit geringer werden.

Ein weiterer Vorteil der beschriebenen Ausführungsform des Abscheidebehälters 111 ist, daß eine optimale Spannungsverteilung in der Wand des Abscheidebehälters vorliegt und somit eine minimale Material-Ausdehnung auftritt. Es treten somit keine Spannungsspitzen auf, die im Test oder im Betrieb der Verdichteranlage 1 den Abscheidbehälter 111 zerstören können.

Durch die geringe Materialausdehnung hat die durch den Innendruck in der Wand des Abscheidebehälters 111 herbeigeführte Ausdehnung eine verhältnismäßig geringe Auswirkung auf die Verformung anderer Teile der Verdichteranlage 1, so daß insbesondere drehende Teile, wie zum Beispiel die Verdichterschrauben aufgrund Verformung weniger belastet werden. Dadurch wird auch der Verschleiß der Anlage veringert.

Im folgenden werden alternative Ausführungsformen der erfindungsgemäßen Verdichteranlage 1 beschrieben:

Die Hebe- und Schiebehaube 11 kann auch auf eine andere als der beschriebenen Weise, z.B. eiförmig gestaltet sein. Wesentlich ist jedoch, daß sie an ihren horizontal in Richtung des Bodenblechs und ihren vertikal in Richtung der Rahmens 8 verlaufenden Umrandungen an einer Dichtleiste oder Dichtfläche an- oder aufliegt. Die Dichtleisten oder -flächen können entlang der Innenfläche der Haube 11 anliegen, und sie können alternativ dazu oder zusätzlich nur an den Auflagekanten der Haube 11 an derselben anliegen. Diese Anordnungen können auch abschnittsweise verschieden sein.

Weiterhin können auch die Träger 15 in anderer Weise, beispielsweise u-förmig gestaltet sein. Es können auch mehr als zwei Träger 15 oder überhaupt andersartige Trägerelemente nach dem Stand der Technik vorgesehen sein.

## Patentansprüche

1. Verdichteranlage (1)
- mit einer elektrischen Motoreinheit (7),
- mit einem Getriebe (71),
- mit einem Verdichterschrauben-Gehäuse (53), in dem Verdichterschrauben (77, 78) angeordnet sind, und
- mit einem Abscheidebehälter (111) zur Abscheidung des Öls von der verdichteten Luft,
**dadurch gekennzeichnet, daß**
- der Abscheidebehälter (111) und das Gehäuse der Verdichterschrauben zusammen ein zweiteiliges Gußgehäuse bilden,
- wobei der Abscheidebehälter (111) zumindest in seiner unteren Hälfte eine Kugelform aufweist, und
- wobei das zweiteilige Gußgehäuse insgesamt drei Lagerstellen (51, 53, 55) zur Befestigung desselben aufweist, von denen eine erste Lagerstelle (51) vertikal oberhalb der beiden anderen Lagerstellen (53, 55) angeordnet ist.

2. Verdichteranlage (1) nach Anspruch 1, **dadurch gekennzeichnet, daß** die Lagerstellen (51, 53, 55) gehäuseseitig in Form von Flanschen (51a, 52) ausgebildet sind, die auf zwei mit dem Boden verbundenen Hohlprofilen (57, 59) mit rechteckförmigen Profilen befestigt sind,
- wobei das erste Hohlprofil (57) horizontal und in Längsrichtung der Verdichteranlage verläuft,
- das zweite Hohlprofil (59) horizontal und quer zum ersten Hohlprofil (57) verläuft und
- wobei die Oberseiten der beiden Hohlprofile (57, 59) horizontal verlaufen und verschiedene Höhenlagen aufweisen.

3. Verdichteranlage (1) nach Anspruch 2, **dadurch gekennzeichnet, daß**
- die erste Lagerstelle (51) gehäuseseitig von einem ersten Flansch (51a) gebildet wird und die beiden anderen Lagerstellen (53, 55) von einem zweiten Flansch (52) gebildet werden, wobei die beiden anderen Lagerstellen (53, 55) in axialer Richtung der Verdichteranlage hintereinander und in gleicher Höhe gelegen sind,
- der erste Flansch (51a) auf dem ersten Hohlprofil (57) befestigt ist, und
- der zweite Flansch (52) auf dem zweiten Hohlprofil (59) befestigt sind.

4. Verdichteranlage (1) nach Anspruch 3, **dadurch gekennzeichnet, daß** auf dem zweiten Hohllprofil (59) eine Platte (59) befestigt ist, auf die der zweite Flansch (52) befestigt wird.

5. Verdichteranlage (1) nach einem oder mehreren der voranstehenden Ansprüche, **dadurch gekennzeichnet, daß** eine Haube (11) zur Abdeckung der Verdichteranlage vorgesehen ist, die in horizontaler Richtung verschieblich angeordnet sowie entfernbar ist.

## Claims

1. A compressor (1), including
- electric motor block (7)
- gear (71)
- compressor screw housing (53) in which the screws (77, 78) are mounted and
- with a separator (111) to separate the oil from a compressed air
**characterized by**
- a separator (111) and compressor body with screws form an iron cast body consisting of two parts
- therewith, the separator (111) at least in its lower part has a spherical shape and
- two-part cast iron body having in total (51, 53, 55) three supporting parts to fix the cast-iron body with 51 first supporting part located vertically over two other (53. 55) supporting part.

2. The compressor (1) according to claim 1, **characterized by** the 51, 53, 55 supporting parts performed as 51a, 51 flanges (in shape) fixed on two 57, 59 empty profiles connected to rectangular profiles.
- therewith, the 57 first empty profile is located horizontally in a direction of the compressor,
- the 59 second empty profile located horizontally and perpendicular in reference to the 57 first empty profile,
- therewith the upper sides of both 57, 59 empty profiles located horizontally and at different height.

3. The compressor (1) according to claim 2, **characterized by**
- the 51 first support part from a body side formed by the 51a flange, and two other 53, 55 support parts located axially in reference to the compressor in sequence and at the same height,
- the 51a first flange fixed on the 57 first empty profile and
- the 52 second flange fixed on the 59 second empty profile.

4. The compressor (1) according to claim 3, **characterized by** the second empty profile on which the 59 plate is fixed on which the 52 second flange is fixed.

5. The compressor (1) by one or more previous claims **characterized by** a provision of the cap (11) to seal the compressor, that is mounted in such a way that can be displaced horizontally and is removable.

## Revendications

1. L'instalation de compression (1) qui comprend
■ bloc de moteur électrique (7)
■ réducteur (71)
■ bâti du compresseur (53) où sont installés les vis du compresseur (77, 78 ) et
■ séparateur (111) pour séparer i'huile de l'air comprimé
se distinguant par le fait que
■ séparateur ( 111) et bâti des vis du compresseur forment ensemble un bâti en fonte comprenant deux parties,
■ séparateur ayant, au moins dans sa partie inférieur, une forme sphérique et
■ bâti en fonte à deux parties ayant en somme trois parties d'appui ( 51, 53, 55) pour fixer le bâti en fonte dont la première partie d'appui (51) est située verticalement au-dessus de deux autres parties d'appui (53, 55).

2. L'installation de compression (1) selon le point 1, se distinguant par le fait que les parties d'appui (51, 53, 55 ) du côté du bâti sont exécutéts en forme des brides (51a, 51) fixées sur deux profils creux rectangulaires (57,59) liées avec le fond,
■ dont le premier profil creux (57) passe horizontalement et en sens de l'installation de compression,
■ le deuxième profil creux (59) passe horizontalement et perpendiculairement au premier profil creux (57),
■ les surfaces supérireures des deux profils creux (57, 59) passant horizontalement et aux hauteurs différentes.

3. L'installation de compression (1) selon le point 1, se distinguant par le fait que
■ la premiére partie d'appui (51) du côté du bâti est formée par la première bride (51a), et deux autres parties d'appui sont formées par la deuxième bride (52), deux autres parties d'appui étant situées en sens axial de l'installation de compression successivement et à la même hauteur,
■ la première bride (51a) étant fixée sur le premier profil creux (57) et
■ la deuxième bride étant fixée sur le deuxième profil creux (59).

4. L'installation de compression (1) selon le point 3, se distinguant par le fait qu' une plaque (56) est fixèe sur la deuxiéme profil creux (59) et sur cette plaque est fixée la deuxième bride (52).

5. L'installation de compression (1) selon un ou plusieurs points précédants se distinguant par le fait qu'une hotte (11) est prévue pour hermétisation de l'installation de compression qui est amovible et montée avec la possibilité de déplacement.
